# EUROPEAN PATENT APPLICATION

(11) **EP 2 260 978 A1**
(43) Date of publication of application: **15.12.2010**
(21) Application number: 09729063.9
(22) Date of filing: 27.03.2009
(51) Int. Cl.: B24C 3/32, B23G 1/22, B23P 25/00

(54) **METHOD OF MANUFACTURING SCREW JOINT PRODUCT**

(30) Priority: 31.03.2008 JP 2008089834
(71) Applicant: Sumitomo Metal Industries, Ltd., Osaka 541-0041 (JP)
(72) Inventor: KUROIWA, Yoshiyuki, Osaka-shi Osaka 541-0041 (JP)
(74) Representative: Jackson, Martin Peter
(86) International application number: PCT/JP2009/056233
(87) International publication number: WO 2009/123034

(57) **Abstract**

The present invention provides a method for producing a threaded joint capable of improving the life of an O.D. turning tool and consequently improving the life of a chaser. The method for producing a threaded joint, which includes O.D. turning the surface of a joint followed by threading, wherein, before the O.D. turning, the surface of the joint is descaled by shot blasting.

## Description

### Field of the Invention

The present invention relates to a method for producing a threaded joint for such as an oil country tubular goods and a coupling, having a threaded portion at a pipe end.

### Background Art

API buttress threads have been employed in oil country tubular goods for use in drilling oil wells or gas wells. Further improvement of joint strength and air-tightness are desired. A buttress-type thread for Extreme-line casing may also be used. A thread for a steel pipe is generally formed by O.D. turning (Outside Diameter turning) with a turning tool or the like followed by rough machining and finish machining with a chaser for a thread shape.

In patent document 1, the Applicant disclosed an invention related to a thread cutting method, which includes the steps of:
machining an outside diametrical base shape of a tapered-thread;
subjecting rough threading one or more times with a chaser having a predetermined shape; and
subjecting finish threading one or more times with a chaser having a predetermined shape.

[Patent Document 1] JP2001-30113A

### Disclosure of the Invention

### Problems to be Solved by the Invention

An object of the aforementioned invention is to improve the life of a chaser by adjusting the shape of the chaser itself. As a result of an extensive research in order to improve the life of an O.D. turning tool so as to improve the life of a chaser, in place of adjusting the chaser itself, the inventors have obtained the following knowledge.

Oxide scales are formed on the surface of a steel pipe before O.D. turning. Oxide scales are mainly formed during hot working of a pipe or heat treatment. The oxide scales are hard and thus shortens the life of O.D. turning tools such as the turning tool. If the performance of an O.D. turning tool is reduced, and a part of a steel pipe is left uncut, it is required to cut the part of the steel pipe by a chaser. This in turn shortens the life of the chaser. Since the O.D. turning tool is inexpensive as compared with the chaser, conventionally, an influence on the life of the chaser has been suppressed by frequently replacing the O.D. turning tool.

Mechanical removing means such as shot blasting is known as means for removing oxide scales. As widely known, shot blasting generally increases the hardness of a steel product because of a peening effect. In view of this, shot blasting and other mechanical removing means have not been employed as treatment before O.D. turning of a steel pipe.

As a result of a research by the inventors, it has been found that an influence of an increase in hardness of a steel pipe surface because of a peening effect is small as compared with a hardness reducing effect by removing hard oxide scales. The inventors have found that the life of the O.D. turning tool can be improved and consequently the life of the chaser can be improved by subjecting a threaded part of a steel pipe to shot blasting before O.D. turning, and accomplished the invention.

An object of the invention is to provide a method for producing a threaded joint capable of improving the life of an O.D. turning tool and consequently improving the life of a chaser.

### Means for Solving the Problems

In views of the aforementioned problems, a summary of the invention is "a method for producing a threaded joint, which comprises the steps of: descaling a surface of a joint by shot blasting; subjecting the surface of the joint to O.D. turning; and threading the joint."

The method for producing a threaded joint of the present invention is particularly advantageous in producing an oil well pipe threaded joint, and more particularly advantageous in producing a threaded joint of a martensite stainless steel pipe.

### Effect of the Invention

According to the present invention, since the life of an O.D. turning tool can be improved and consequently the life of a chaser can be improved, the invention improves the productivity of threaded joints such as oil well pipe threaded joints and reduces the production cost.

### BRIEF DESCRIPTION OF THE DRAWING

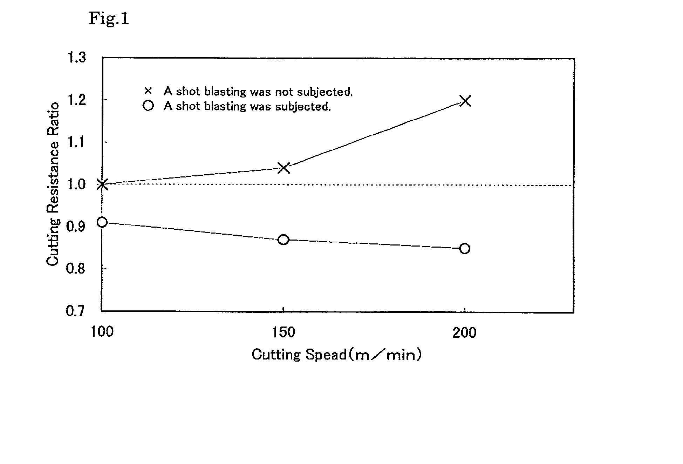

Fig. 1 is a diagram showing ratios of cutting resistances in Example.

### BEST MODE FOR CARRYING OUT THE INVENTION

In the present invention, a surface of a joint is descaled by shot blasting, followed by O.D. turning and threading. Thus, removing scales by shot blasting prior to O.D. turning improves the life of the O.D. turning tool.

### <Shot Blasting Process>

A method for blasting shot particles is not specifically limited. Any one of the following systems may be used.
a mechanical system of blasting shot materials by the centrifugal force of an impeller at a blasting angle defined by a control gauge,
an air system (referred to as "air blasting") of blasting a shot material by compressed air, and
a wet system (referred to as "wet blasting") of blasting a mixture of a shot material and water.
Among these, the air system is preferable.

As shot particles, cut wire obtained by cutting a metal wire, wire particles with round corners, or spherical particles (steel shots or steel beads) of cast iron or cast steel produced by atomization may be used. Alternatively, shot particles such as spherical particles or fine powder of ceramics having a sufficient hardness such as alumina or silicon carbide (SiC) may also be used. Use of shot particles of excessive hardness may increase the hardness of an outside-diameter-turned surface of a steel product. Accordingly, it is preferable to use shot particles having a hardness of 2050 HV or less. For instance, steel beads or alumina may be used.

The average diameter of shot particles is set preferably from 300 to 2500 µm. If the average particle diameter is smaller than 300 µm, the energy of each shot particle may be reduced, and the descaling performance may be lowered. In other words, the problem of degraded descaling efficiency may occur. On the other hand, if the average particle diameter is larger than 2500 µm, the surface of a steel product may become rough, because the size of each shot particle is large.

The blasting speed of the shot blast particles is preferably from 50 to 150 m/s. At smaller than 50m/s, the energy of each shot particle may be reduced, and the descaling performance may be lowered. In other words, the descaling efficiency may be degraded. On the other hand, exceeding 150 m/s results in increased load on production facility as well as load on the product. This necessitates replacement of consumable supplies and repairing, resulting in degraded descaling efficiency.

The blasting angle of the shot blast particles is preferably from 20 to 40°. At smaller than 20°, an influence of the shot peening effect may become excessive. On the other hand, at larger than 40°, the energy for removing the scales may be reduced. In other words, the problem of degraded descaling efficiency may occur.

The blasting density of shot blast particles is preferably from 50 to 200 kg/m². At smaller than 50 kg/m², the descaling may be insufficient, with the result that scales may be left unremoved. In excess of 200 kg/m², an excessive shot condition may result such that the shot blasting continues after the scales are removed, and in addition, the surface of the product may become rough.

### < O.D. turning Process>

An ordinary cutting tool may be used as a tool in O.D. turning. For instance, a turning tool of a high-speed steel or an ultra-hard alloy, or a turning tool having a cutting edge of a harder material at a tip thereof by brazing may be used.

### <Threading Process>

A chaser having multiple threads is used in threading. Threading from rough machining to finish machining may be performed by a single chaser. For instance, as recited in patent document 1,
rough threading may be performed one or more times with a chaser having a cutting edge of a saw-tooth thread shape with three or more threads, wherein a trailing flank of the cutting edge has an obtuse or right angle at an opposite pipe end with respect to an axis of a threaded joint, and a leading flank of the cutting edge has an acute angle at the opposite pipe end with respect to the axis of the threaded joint; and
finish threading may be performed one or more times with a chaser having a cutting edge with one or more threads identical to a square finishing thread in shape, wherein a leading flank and a trailing flank of the cutting edge have an acute angle at an opposite pipe end with respect to the axis of the threaded joint.

### <Target Threaded Joints >

The invention targets threaded joints, particularly oil well pipe threaded joints. High alloy steel is used for oil well pipes which need ultra high strength and corrosion resistance The scales formed on the surface of the high alloy steel contain Cr or other element which may increase the hardness of scales. Accordingly, shot blasting before O.D. turning of this invention is more effective for oil well pipes. The steel for oil well pipes for this invention include a martensite stainless steel, and particularly effective for a martensite stainless steel containing Cr : 11 to 14% and Ni : 4 to 7%. The threaded joints include coupling joints as well as steel pipe joints.

### Example

In order to investigate the effect of the invention that improves the life of an O.D. turning tool, an experiment was conducted, wherein cutting resistances were measured in forming outside diametrical base shape of a tapered-thread, with use of a turning tool, at a pipe end of a martensite stainless steel (a steel containing C:0.009%, Si:0.20%, Mn:0.44%, P:0.017%, S:0.0008%, Cu:0.23%, Cr:12.05%, Ni:5.49%, and Mo:1.92%, with the balance being Fe and impurity) pipe. The cutting was performed at three different cutting speeds of 100 m/min, 150/min, and 200/min. Fig. 1 shows the result of a comparison between the cutting resistance in the case where shot blasting was performed in the following condition and the cutting resistance in the case where shot blasting was not performed.

### <Shot Blasting Condition>

Kind of particles: alumina (Al₂O₃)
Average particle diameter: #16 (1000 to 1400 µm)
Blasting speed: 100 m/s
Blasting angle: 30°
Blasting density: 70 kg/m²

Fig. 1 shows cutting resistance ratios in the two cases with the assumption that cutting resistance in machining a steel pipe not subjected to shot blasting at a cutting speed of 100 m/s is set to 1.

As shown in Fig. 1, as compared with a steel pipe not subjected to shot blasting, a steel pipe subjected to shot blasting had a smaller cutting resistance at any cutting speed.

### [Industrial Applicability]

According to the invention, since the life of an O.D. turning tool is improved and consequently the life of a chaser is improved, the productivity of oil well pipe threaded joints and other threaded joints improves and the production cost reduces.

## Claims

1. A method for producing a threaded joint, which comprises the steps of:
descaling a surface of a joint material by shot blasting;
subjecting the surface of the joint material to O.D. turning; and
threading the joint material.

2. The method for producing a threaded joint according to claim 1, wherein the threaded joint is an oil well pipe threaded joint.

3. The method for producing a threaded joint according to claim 2, wherein the joint material is a martensite stainless steel.
